# EUROPÄISCHE PATENTANMELDUNG

(11) **EP 4 830 866 A1**
(43) Veröffentlichungstag der Anmeldung: **28.10.2026**
(21) Anmeldenummer: 26170946.3
(22) Anmeldetag: 07.04.2026
(51) Int. Cl.: B23K 37/047, B23K 37/04, B23Q 7/14, B25J 9/00, B23K 101/06

(54) **VERFAHREN ZUM AUTOMATISCHEN ZUFÜHREN UND/ODER ABFÜHREN VON WERKSTÜCKEN AN EINER WERKZEUGMASCHINE ZUM DREHENDEN BEARBEITEN VON ROHRFÖRMIGEN ODER KREISZYLINDRISCHEN WERKSTÜCKEN, ZUGEHÖRIGE HANDHABUNGSVORRICHTUNG UND ZUGEHÖRIGES BEARBEITUNGSSYSTEM**

(30) Priorität: 23.04.2025 DE 102025115611
(71) Anmelder: KUKA Deutschland GmbH, 86165 Augsburg (DE)
(72) Erfinder: Schneider, Klaus, 86316 Friedberg (DE); Fischer, Otmar, 86150 Augsburg (DE); Büchler, Michael, 85316 Friedberg (DE); Pham, Andy, 86163 Augsburg (DE); Hauck, Thomas, 86438 Kissing (DE)
(74) Vertreter: Dorow, Florian

(57) **Zusammenfassung**

Die Erfindung betrifft ein Verfahren zum automatischen Zuführen und/oder Abführen von Werkstücken (1) an einer Werkzeugmaschine (2) zum drehenden Bearbeiten von rohrförmigen oder kreiszylindrischen Werkstücken (1), unter anderem aufweisend den Schritt des Führens wenigstens einer Lünette (5) mittels einer automatisch ansteuerbaren Handhabungsvorrichtung (4) derart, dass die Handhabungsvorrichtung (4) ein Werkstück (1) aus einem ersten Werkstücklager (3.1) mittels der wenigstens einen Lünette (5) erfasst und in die Lünette (5) aufnimmt, das von der Lünette (5) getragene Werkstück (1) durch die Handhabungsvorrichtung (4) in die Bearbeitungsposition bewegt wird und/oder die Handhabungsvorrichtung (4) das mittels der wenigstens einen Lünette (5) erfasste Werkstück (1) aus der Bearbeitungsposition entfernt, an das zweite Werkstücklager (3.2) bewegt und dort durch automatisches Lösen der wenigstens einen Lünette (5) ablegt, wobei während einer Bearbeitung des Werkstücks (1) durch eine Werkzeugmaschine (2), das Werkstück (1) in der wenigstens einen Lünette (5) geführt ist, indem die Handhabungsvorrichtung (4) die wenigstens eine Lünette (5) in einer der Bearbeitungsposition des Werkstücks (1) entsprechenden Führungsposition hält. Die Erfindung betrifft außerdem eine zugehörige Handhabungsvorrichtung (4) und ein zugehöriges Bearbeitungssystem (11).

## Beschreibung

Die Erfindung betrifft ein Verfahren zum automatischen Zuführen und/oder Abführen von Werkstücken an einer Werkzeugmaschine zum drehenden Bearbeiten von rohrförmigen oder kreiszylindrischen Werkstücken, unter anderem mit den Schritten des Bereitstellens von zu bearbeitenden Werkstücken an einem zuführenden ersten Werkstücklager neben der Werkzeugmaschine, des Bereitstellens eines abführenden zweiten Werkstücklagers zur Aufnahme von in der Werkzeugmaschine bearbeiteten Werkstücken, und des Bereitstellens einer automatisch ansteuerbaren Handhabungsvorrichtung zum automatischen Entnehmen eines Werkstückes aus dem ersten Werkstücklager und Positionieren des entnommenen Werkstücks in eine Bearbeitungsposition in der Werkzeugmaschine und/oder zum automatischen Entnehmen des bearbeiteten Werkstücks aus der Bearbeitungsposition in der Werkzeugmaschine und Ablegen des bearbeiteten Werkstücks in dem zweiten Werkstücklager. Die Erfindung betrifft außerdem eine zugehörige Handhabungsvorrichtung und ein zugehöriges Bearbeitungssystem.

Die WO 2016 075 218 A1 beschreibt eine Pressschweißvorrichtung mit einer Plastifizierungseinrichtung und einer Staucheinrichtung sowie einer Halterung für die zu verschweißenden Bauteile und einem Maschinengestell, wobei die Pressschweißvorrichtung einen Maschinenkopf und einen Stauchkopf aufweist, die längs einer Maschinenachse relativ zueinander beweglich sind, wobei die Halterung eine zwischen dem Maschinenkopf und dem Stauchkopf schwimmfähig am Maschinengestell gelagerte Bauteilaufnahme und eine bevorzugt automatische Stelleinrichtung zur Anpassung an unterschiedliche Bauteilmaße, insbesondere Bauteillängen, aufweist.

Aufgabe der Erfindung ist es, ein Verfahren zum automatischen Zuführen und/oder Abführen von Werkstücken an einer Werkzeugmaschine zum drehenden Bearbeiten von rohrförmigen oder kreiszylindrischen Werkstücken, sowie eine entsprechende Handhabungsvorrichtung und ein Bearbeitungssystem zu schaffen, durch das die Werkstücke an der Werkzeugmaschine mit geringen Zykluszeiten bearbeitet werden können.

Die Aufgabe wird gelöst durch ein Verfahren zum automatischen Zuführen und/oder Abführen von Werkstücken an einer Werkzeugmaschine zum drehenden Bearbeiten von rohrförmigen oder kreiszylindrischen Werkstücken, aufweisend die Schritte:
- Bereitstellen von zu bearbeitenden Werkstücken an einem zuführenden ersten Werkstücklager neben der Werkzeugmaschine,
- Bereitstellen eines abführenden zweiten Werkstücklagers zur Aufnahme von in der Werkzeugmaschine bearbeiteten Werkstücken,
- Bereitstellen einer automatisch ansteuerbaren Handhabungsvorrichtung zum automatischen Entnehmen eines Werkstückes aus dem ersten Werkstücklager und Positionieren des entnommenen Werkstücks in eine Bearbeitungsposition in der Werkzeugmaschine und/oder zum automatischen Entnehmen des bearbeiteten Werkstücks aus der Bearbeitungsposition in der Werkzeugmaschine und Ablegen des bearbeiteten Werkstücks in dem zweiten Werkstücklager,
- Führen wenigstens einer Lünette mittels der automatisch ansteuerbaren Handhabungsvorrichtung derart, dass die Handhabungsvorrichtung ein Werkstück aus dem ersten Werkstücklager mittels der wenigstens einen Lünette erfasst und in die Lünette aufnimmt, das von der Lünette getragene Werkstück durch die Handhabungsvorrichtung in die Bearbeitungsposition bewegt wird und/oder die Handhabungsvorrichtung das mittels der wenigstens einen Lünette erfasste Werkstück aus der Bearbeitungsposition entfernt, an das zweite Werkstücklager bewegt und dort durch automatisches Lösen der wenigstens einen Lünette ablegt, wobei während einer Bearbeitung des Werkstücks durch die Werkzeugmaschine, das Werkstück in der wenigstens einen Lünette geführt ist, indem die Handhabungsvorrichtung die wenigstens eine Lünette in einer der Bearbeitungsposition des Werkstücks entsprechenden Führungsposition hält.

An Werkzeugmaschinen zum drehenden Bearbeiten von rohrförmigen oder kreiszylindrischen Werkstücken ist es zweckmäßig und gewünscht die zu bearbeitenden Werkstücke automatisch in die Werkzeugmaschine einzusetzen und nach der Bearbeitung in der Werkzeugmaschine auch wieder automatisch zu entnehmen. Bisher werden dazu Roboterarme verwendet, welche spezielle Greifer aufweisen, um ein Werkstück entsprechend automatisch greifen zu können und in der Bearbeitungsposition an der Werkzeugmaschine ablegen zu können.

Bei der drehenden Bearbeitung von Werkstücken in einer Werkzeugmaschine ist es bekannt, Lünetten zu verwenden, welche Teile der Werkzeugmaschine sind und auf dem Maschinenbett entweder starr befestigt sein können oder auf Schlitten am Maschinenbett parallel zur Drehachse der Werkzeugmaschine bzw. des zu bearbeitenden, drehenden Werkstücks linear verstellbar gelagert werden können. Die Lünetten dienen dazu, das sich drehende oder stehende Werkstück während seiner Bearbeitung in der Werkzeugmaschine zu führen und/oder abzustützen, beispielsweise um unerwünschte Durchbiegungen oder Schwingungen des Werkstücks während der Bearbeitung in der Werkzeugmaschine zu verhindern oder zumindest im erforderlichen Maße zu verringern.

Übliche am Maschinenbett der Werkzeugmaschine angebrachte Lünetten weisen unter anderem einen linear verstellbaren Spannstößel und zwei schwenkbar verstellbare Spannarme auf, die so synchronisiert bewegt werden können, dass über den gesamten möglichen Durchmesserbereich der Lünette das Zentrum aller Bauteilmittelachsen identisch sind. Spannstößel und Spannarme weisen jeweils eine Lagerstelle auf, mit denen ein in die Lünette eingelegtes rohrförmiges oder kreiszylindrisches Werkstück in der Lünette geführt wird. Die jeweilige Lagerstelle kann beispielsweise eine am distalen Armende des Spannarmes drehbar gelagerte Rolle aufweisen, welche bei einer Drehung des rohrförmigen oder kreiszylindrischen Werkstücks in der Lünette auf der Außenmantelwand des Werkstücks abwälzt. Je nach Länge der zu bearbeitenden Werkstücke ist lediglich eine einzige Lünette zum Abstützen des Werkstücke notwendig oder bei längeren Werkstücken sind mehrere Lünetten erforderlich, welche in vorgegebenen Abständen voneinander am Maschinenbett angeordnet sind und sich in einer gemeinsamen Flucht befinden.

Nachteilig bei bekannten automatisierten Systemen ist es jedoch, dass beispielsweise ein Roboterarm das zu bearbeitende Werkstück aus einem Werkstücklager entnehmen und in die geöffnete Lünette oder in die mehreren geöffneten Lünetten einlegen muss und der Roboterarm dann das Werkstück loslässt und aus dem Arbeitsbereich der Werkzeugmaschine herausgefahren werden muss. In analoger Weise muss derselbe oder ein anderer Roboterarm vorgesehen sein, welcher das in der Werkzeugmaschine fertig bearbeitete Werkstück erneut greift und wieder aus der Bearbeitungsposition in den Lünetten heraushebt und in einem anderen Werkstücklager ablegt. Die jeweilige Übergabe des Werkstücks zwischen einem Greifer des Roboterarms und den Lünetten ist in seiner Abstimmung der Bewegungen kritisch und erfordert einen gewissen Zeitaufwand. Dieser Zeitaufwand für die Übergabe des Werkstücks erhöht die Zykluszeiten für das Bearbeiten eines Werkstücks. Demgemäß ist der Bearbeitungsdurchsatz eher gering.

Um diesen Nachteil auszuräumen, wird daher erfindungsgemäß vorgeschlagen, dass das Verfahren derart durchgeführt wird, dass ein Führen wenigstens einer Lünette mittels der automatisch ansteuerbaren Handhabungsvorrichtung derart erfolgt, dass die Handhabungsvorrichtung ein Werkstück aus dem ersten Werkstücklager mittels der wenigstens einen Lünette erfasst und in die Lünette aufnimmt, das von der Lünette getragene Werkstück durch die Handhabungsvorrichtung in die Bearbeitungsposition bewegt wird und/oder die Handhabungsvorrichtung das mittels der wenigstens einen Lünette erfasste Werkstück aus der Bearbeitungsposition entfernt, an das zweite Werkstücklager bewegt und dort durch automatisches Lösen der wenigstens einen Lünette ablegt, wobei während einer Bearbeitung des Werkstücks durch die Werkzeugmaschine, das Werkstück in der wenigstens einen Lünette geführt ist, indem die Handhabungsvorrichtung die wenigstens eine Lünette in einer der Bearbeitungsposition des Werkstücks entsprechenden Führungsposition hält.

Im Unterschied zu konventionellen Systemen, bei denen die Lünetten an dem Maschinenbett der Werkzeugmaschine befestigt und allenfalls linear daran verschiebbar gelagert sind, ist erfindungsgemäß vorgesehen, dass die wenigstens eine Lünette, oder die mehreren Lünetten, an der Handhabungsvorrichtung angeordnet sind, so dass die Handhabungsvorrichtung die Lünetten separat von der Werkzeugmaschine bewegen und im Raum positionieren kann. Die wenigstens eine Lünette, oder die mehreren Lünetten, werden somit dabei auch in der Funktion eines Greifers verwendet. Demgemäß bewegt die Handhabungsvorrichtung die wenigstens eine Lünette an das erste Werkstücklager heran, so dass das unbearbeitete Werkstück aus dem erste Werkstücklager mittels der wenigstens einen Lünette gefasst und festgehalten werden kann. Eine Bewegung der Handhabungsvorrichtung bewegt dann die wenigstens eine Lünette zusammen mit dem Werkstück aus dem ersten Werkstücklager heraus. Die Handhabungsvorrichtung bewegt folglich wenigstens eine Lünette zusammen mit dem Werkstück in eine Bearbeitungsposition in der Werkzeugmaschine, in welcher das von der wenigstens einen Lünette gefasste und von der Handhabungsvorrichtung positionierte Werkstück von der Werkzeugmaschine bearbeitet werden kann. Die Handhabungsvorrichtung positioniert somit die wenigstens eine Lünette relativ zur Werkzeugmaschine. Dadurch ist es nicht erforderlich, dass die wenigstens eine Lünette direkt mit dem Maschinenbett der Werkzeugmaschine verbunden sein muss.

Hieraus ergibt sich auch der Vorteil, dass das erfasste und aus dem ersten Werkstücklager entnommene Werkstück nicht nochmals in stationäre Lünetten übergeben werden muss. Eine ansonsten erforderliche Zeit für das Loslassen durch die Handhabungsvorrichtung und das separate Einlegen in die Lünetten kann demgemäß entfallen. Darüber hinaus ist es nicht erforderlich, dass ein Einlegen in die Lünetten in der eigentlichen Bearbeitungsposition stattfinden müsste, wie im Stand der Technik, sondern das Einlegen eines Werkstücks in die durch die Handhabungsvorrichtung beweglichen Lünetten findet bereits im Bereich des Werkstücklagers statt und nicht in der Bearbeitungsposition an der Werkzeugmaschine. Folglich kann beispielsweise eine erste Handhabungsvorrichtung ein Werkstück bereits im Bereich des Werkstücklagers in erste Lünetten der ersten Handhabungsvorrichtung aufnehmen, während zweite Lünetten einer zweiten Handhabungsvorrichtung ein momentan sich an der Werkzeugmaschine in Bearbeitung befindendes Werkstück in der Bearbeitungsposition halten.

Das automatische Führen der wenigstens einen Lünette kann mittels der Handhabungsvorrichtung zwischen einer Anfangsposition an dem ersten Werkstücklager und der Bearbeitungsposition in der Werkzeugmaschine und/oder zwischen der Bearbeitungsposition in der Werkzeugmaschine und einer Endposition an dem zweiten Werkstücklager synchron zu einer automatischen Öffnungsbewegung und/oder Schließbewegung wenigstens eines an einem Grundkörper der Lünette zwischen einer Öffnungsstellung und einer Schließstellung synchron verstellbar gelagerten Spannarms der Lünette erfolgen.

Die erfindungsgemäße technische Lösung ist gleichermaßen anwendbar, wenn lediglich eine einzige Lünette mittels der Handhabungsvorrichtung bewegt wird, beispielsweise im Falle kurzer rohrförmiger oder kreisförmiger Werkstücke, oder wenn mehrere Lünetten mittels der Handhabungsvorrichtung gemeinsam bewegt werden, beispielsweise im Falle sehr langer und/oder schwerer rohrförmiger oder kreisförmiger Werkstücke. Wenn im Folgenden von mehreren Lünetten gesprochen wird, so bedeutet dies auch, dass in Spezialfällen gegebenenfalls auch nur eine einzige Lünette vorgesehen sein kann.

Besonders lange und/oder schwere rohrförmige oder kreisförmige Werkstücke können in einem speziellen Anwendungsfall Bohrgestänge sein, wie sie in Bohranlagen zum Durchbohren von Erdschichten verwendet werden. Derartige Bohrgestänge können Durchmesser von beispielsweise 35 bis 300 Millimeter aufweisen und axiale Längen zwischen 0,5 und 15 Meter aufweisen. Solche Bohrstangen werden an ihren axialen Stirnenden beispielsweise mittels Reibschweißen mit Gewindestücken oder sonstigen Verbindern versehen. Die verwendete Werkzeugmaschine kann demgemäß eine Pressschweißmaschine, eine Reibschweißmaschine, Rotationsreibschweißmaschine oder eine Magnetarc-Schweißmaschine sein. Speziell größere Bauarten solcher Bohrstangen können aufgrund ihres hohen Gewichtes, beispielsweise von mehreren 100 Kilogramm, nicht manuell gehandhabt werden, sondern müssen mittels automatisch ansteuerbaren Handhabungsvorrichtungen bewegt werden.

Eine synchrone Bewegung der verstellbar gelagerten Spannarme der Lünetten zwischen ihren Öffnungsstellungen und Schließstellungen, zu der Bewegung der Handhabungsvorrichtung zwischen der Bearbeitungsposition und der Anfangsposition an dem ersten Werkstücklager oder der Endposition an dem zweiten Werkstücklager, bedeutet dabei nicht, dass diese beiden Bewegungsarten gleichzeitig beginnen und gleichzeitig enden müssen, sondern dass die Bewegungen der verstellbar gelagerten Spannarme der Lünetten zwischen ihren Öffnungsstellungen und Schließstellungen auf die Bewegung der Handhabungsvorrichtung zwischen der Bearbeitungsposition und der Anfangsposition an dem ersten Werkstücklager oder der Endposition an dem zweiten Werkstücklager zeitlich abgestimmt sind, dahingehend, dass die Spannarme der Lünetten geöffnet sind oder geöffnet bzw. geschlossen werden, wenn die Handhabungsvorrichtung an das erste Werkstücklager oder an das zweite Werkstücklager heranbewegt ist und die Spannarme der Lünetten in ihren Schließstellungen bleiben, solange ein Werkstück durch die Handhabungsvorrichtung bewegt wird und solange eine Werkstück in der Bearbeitungsposition in der Werkzeugmaschine momentan bearbeitet wird. Insoweit sind die beiden Bewegungsarten aufeinander abgestimmt und insoweit synchronisiert.

Bei den Verfahren kann als Lünette eine C-Form-Lünette verwendet werden und das automatische Führen der wenigstens einen C-Form-Lünette mittels der Handhabungsvorrichtung kann derart durchgeführt werden, dass während des Haltens des Werkstücks mittels der C-Form-Lünette, in der Bearbeitungsposition in der Werkzeugmaschine, die C-Form-Lünette derart orientiert geführt wird, dass die radiale Öffnung der C-Form-Lünette nach unten weist.

Eine C-Form-Lünette als solches kann einen Grundkörper aufweisen, an dem beispielsweise ein linear verstellbarer Spannstößel und ein zangenbackenförmiger Spannarm oder zwei zangenbackenförmige Spannarme zwischen einer jeweiligen Öffnungsstellung, in der ein Werkstück in einer radialen Richtung in eine Aufnahmeposition an der C-Form-Lünette eingesetzt werden kann, und einer Schließstellung, in welcher die Spannarme das eingesetzte Werkstück um mehr als 180 Grad umschließen, schwenkbar gelagert sind. Der Spannstößel und jeder Spannarm kann an seinem distalen Armende eine Lagerstelle aufweisen, die beispielsweise eine am distalen Armende des Spannarmes drehbar gelagerte Rolle lagert, welche in der Schließstellung bei einer Drehung des rohrförmigen oder kreiszylindrischen Werkstücks in der Lünette auf der Außenmantelwand des Werkstücks abwälzt. Am Grundkörper kann eine dritte Lagerstelle ausgebildet sein. Auch die dritte Lagerstelle kann eine drehbar gelagerte Rolle sein, welche in der Schließstellung der Spannarme bei einer Drehung des rohrförmigen oder kreiszylindrischen Werkstücks in der Lünette auf der Außenmantelwand des Werkstücks abwälzt. Die dritte Lagerstelle kann an dem Grundkörper zwischen einem ersten Spannarm und einem zweiten Spannarm angeordnet sein. Die dritte Lagerstelle kann linear verstellbar an dem Grundkörper gelagert sein, und zwar in einer radialen Richtung auf das Werkstück zu bzw. von dem Werkstück weg.

Indem die C-Form-Lünette derart orientiert geführt wird, dass die radiale Öffnung der C-Form-Lünette nach unten weist, während sie ein Werkstück hält bzw. führt, insbesondere in der Bearbeitungsposition an der Werkzeugmaschine, kann das Werkstück in der Bearbeitungsposition an der Werkzeugmaschine aus einer Tragposition bzw. aus einer Greifposition der C-Form-Lünette über dem Werkstück gehalten werden. Nach einem Loslassen eines Werkstücks von den C-Form-Lünetten können die gelösten C-Form-Lünetten mit einer Bewegung, die eine nach oben weisende Richtungskomponente aufweist, von dem Werkstück wegbewegt werden. Dies ist insbesondere in der Bearbeitungsposition des Werkstücks in der Werkzeugmaschine zweckmäßig, so dass die gelösten C-Form-Lünetten in einer nach oben gehenden Richtung von der Werkzeugmaschine wegbewegt werden können. Die C-Form-Lünetten müssen somit nicht unterhalb des Werkstücks in der Bearbeitungsposition zwischen dem Maschinenbett und dem Werkstück herausgefädelt werden.

Die Lünette kann demgemäß wenigstens einen an einem Grundkörper der Lünette zwischen einer Öffnungsstellung und einer Schließstellung verstellbar gelagerten Spannarm aufweisen, wobei nach einem Erfassen und Aufnehmen eines Werkstücks durch die von der Handhabungsvorrichtung geführte Lünette, die Schließstellung des wenigstens einen verstellbar gelagerten Spannarms automatisch überwacht werden kann.

Speziell wenn eine C-Form-Lünetten in der bereits beschriebenen Überkopforientierung von der Handhabungsvorrichtung geführt wird, ist es aus sicherheitstechnischen Gründen vorteilhaft die Schließstellung der verstellbar gelagerten Spannarme automatisch zu überwachen. In der Schließstellung können die Spannarme auch gegen unbeabsichtigtes Lösen gesichert werden, beispielsweise durch ein automatisch zu betätigendes hydraulisches Ventil und/oder durch einen automatisch zu betätigenden mechanischen Riegel und/oder eine automatisch betätigte Klemmeinrichtung zum Verriegeln des verstellbar gelagerten Spannarms in seiner Schließstellung.

Bei den Verfahren kann eine erste Handhabungsvorrichtung vorgesehen sein, welche das Werkstück aus dem ersten Werkstücklager mittels wenigstens einer Belade-Lünette erfasst, in die Belade-Lünette aufnimmt und in die Bearbeitungsposition bewegt, und es kann eine von der ersten Handhabungsvorrichtung separate zweite Handhabungsvorrichtung vorgesehen sein, welche das Werkstück mittels wenigstens einer Entlade-Lünette aus der Bearbeitungsposition entfernt, an das zweite Werkstücklager bewegt und dort durch automatisches Lösen der Entlade-Lünette ablegt.

So kann beispielsweise auf einer lateralen Seite neben der Werkzeugmaschine die erste Handhabungsvorrichtung zwischen dem ersten Werkstücklager und der Werkzeugmaschine angeordnet sein und dazu vorgesehen sein, mittels der wenigstens einen Belade-Lünette ein in der Werkzeugmaschine zu bearbeitendes Werkstück aus dem ersten Werkstücklager automatisch zu entnehmen und in die Werkzeugmaschine einzusetzen bzw. in die Bearbeitungsposition an der Werkzeugmaschine zu bringen, so dass das von der wenigstens einen Belade-Lünette gehaltene Werkstück durch die Werkzeugmaschine bearbeitet werden kann.

Auf der gegenüberliegenden lateralen Seite neben der Werkzeugmaschine kann die zweite Handhabungsvorrichtung zwischen der Werkzeugmaschine und einem zweiten Werkstücklager angeordnet sein und dazu vorgesehen sein, mittels der wenigstens einen Entlade-Lünette das in der Werkzeugmaschine bereits bearbeitete Werkstück aus der Bearbeitungsposition an der Werkzeugmaschine automatisch zu entfernen und an das zweite Werkstücklager zu bewegen, so dass das von der wenigstens einen Entlade-Lünette gehaltene Werkstück in das zweite Werkstücklager abgelegt werden kann.

Während die zweite Handhabungsvorrichtung das bereits bearbeitete Werkstück aus der Bearbeitungsposition an der Werkzeugmaschine automatisch entnimmt, kann gleichzeitig die erste Handhabungsvorrichtung ein neues zu bearbeitendes Werkstück aus dem ersten Werkstücklager entnehmen und an die Bearbeitungsposition an der Werkzeugmaschine heranbewegen. In der Bearbeitungsposition an der Werkzeugmaschine kann das Werkstück vorübergehend oder während der gesamten Bearbeitungsdauer sowohl von den Belade-Lünetten der ersten Handhabungsvorrichtung als auch von den Entlade-Lünetten der zweiten Handhabungsvorrichtung gehalten werden.

Die Handhabungsvorrichtung kann wenigstens eine automatisch verstellbar gelagerte erste Lünette aufweisen und wenigstens eine unabhängig von der ersten Lünette automatisch verstellbar gelagerte zweite Lünette aufweisen, wobei während eines Lagerns eines Werkstücks in der ersten Lünette während einer Bearbeitung des Werkstücks durch die Werkzeugmaschine in einer der Bearbeitungsposition des Werkstücks entsprechenden Führungsposition der ersten Lünette, die zweite Lünette in eine von der Führungsposition verschiedenen Verwahrungsposition bewegt ist, in der die zweite Lünette außerhalb des Arbeitsbereiches von Werkzeugmaschine und Werkstück positioniert ist.

Falls mindestens eine der Handhabungsvorrichtungen mehrere Lünetten aufweist, die jeweils durch eine eigene Bewegungsvorrichtung, wie beispielsweise einem automatisch ansteuerbaren Antrieb, verstellbar sind, können die Bewegungsvorrichtungen eingerichtet und angesteuert sein, nur eine geringere Anzahl als sämtliche Lünetten in ihre Führungspositionen zu bewegen, d.h. in die Bearbeitungsposition des Werkstücks zu bewegen, wobei wenigstens eine der mehreren Lünetten nicht mitbewegt wird, d.h. das Werkstück nicht greift, sondern in einer Verwahrungsposition verbleibt, in der die verwahrte Lünette das momentan von der jeweiligen Bearbeitungsvorrichtung gehandhabte Werkstück nicht greift. So kann wahlweise eine unterschiedliche Anzahl von Lünetten ausgewählt werden, um das Werkstück zu greifen. Eine solche Auswahl der Anzahl von greifenden Lünetten kann beispielsweise anhand der Länge des zu greifenden Werkstücks oder anhand des Gewichts des zu greifenden Werkstücks bestimmt sein.

Bei den Verfahren kann als Handhabungsvorrichtung wenigstens ein um eine Schwenkachse automatisch schwenkbarer Arm verwendet werden, der an seinem distalen Armende wenigstens eine Lünette trägt.

Bei den Verfahren kann alternativ zu einem schwenkbaren Arm als Handhabungsvorrichtung wenigstens ein Roboterarm oder ein Ladeportal verwendet werden, an dessen Werkzeugflansch die wenigstens eine Lünette befestigt ist.

Bei den Verfahren kann als Werkzeugmaschine eine Pressschweißmaschine, eine Reibschweißmaschine, Rotationsreibschweißmaschine oder eine Magnetarc-Schweißmaschine verwendet werden.

Die Aufgabe wird auch gelöst durch eine Handhabungsvorrichtung, aufweisend:
- ein Grundgestell,
- wenigstens ein am Grundgestell um eine Schwenkachse automatisch schwenkbar gelagerten Arm, der ein distales Armende aufweist,
- wenigstens eine an dem Armende des Arms angeordnete Lünette, die einen Grundkörper und wenigstens einen an dem Grundkörper zwischen einer Offenstellung und einer Schließstellung verstellbar gelagerten Spannarm aufweist,
- wenigstens einen automatisch ansteuerbaren Antrieb, der ausgebildet ist zum automatischen Schwenken des Arms zwischen einer Aufnahmestellung in welcher die Lünette in eine Aufnahmeposition bewegt ist, in welcher ein Werkstück aus einem ersten Werkstücklager durch die Lünette aufnehmbar ist, und einer Bearbeitungsstellung in welcher ein von der Lünette getragenes Werkstück in eine Bearbeitungsposition in einer Werkzeugmaschine oder in eine zwischen der Aufnahmeposition und der Bearbeitungsposition liegende Zwischenposition gebracht ist, und/oder
- der ausgebildet ist zum automatischen Schwenken des Arms zwischen einer Bearbeitungsstellung in welcher ein von der Lünette getragenes Werkstück sich in einer Bearbeitungsposition in einer Werkzeugmaschine befindet und einer Abgabestellung in welcher die Lünette in eine nachfolgende Zwischenposition oder in eine Abgabeposition bewegt ist, in welcher das Werkstück durch die Lünette in ein zweites Werkstücklager ablegbar ist.

Die Handhabungsvorrichtung kann einen schwenkbaren Arm oder mehrere schwenkbare Arme aufweisen. Jeder schwenkbare Arm kann an dem Grundgestell oder an einem von mehreren aufeinander abgestimmt angeordneten Grundgestellen um eine parallel zur Drehachse der Werkzeugmaschine bzw. des zu bearbeitenden, drehenden Werkstücks in der Werkzeugmaschine verlaufende Schwenkachse schwenkbar gelagert sein. Mehrere Arme können von einem gemeinsamen Antrieb der Handhabungsvorrichtung automatisch schwenkbar angetrieben sein. Alternativ kann jeder Arm von einem eigenen, separaten Antrieb automatisch schwenkbar angetrieben sein. Als Antrieb kann beispielsweise ein elektrischer Antrieb oder ein hydraulischer Antrieb vorgesehen sein. Jeder Antrieb kann von einer gemeinsamen Steuervorrichtung automatisch angesteuert sein.

Die zwischen der Aufnahmeposition und der Bearbeitungsposition liegende Zwischenposition kann eine Wartestellung für das von den Lünetten gehandhabte Werkstück sein. Die Wartestellung kann dabei eine Position möglichst nahe an der Bearbeitungsposition sein. Dies ermöglicht eine Reduzierung der Taktzeiten, da ein nachfolgendes Werkstück von der Handhabungsvorrichtung bereits aus der Aufnahmeposition in die Zwischenposition bewegt werden kann, während ein vorausgehendes Werkstück noch in der Werkzeugmaschine in der Bearbeitungsposition bearbeitet wird. Nachdem die Bearbeitung des vorausgehenden Werkstücks abgeschlossen und dieses Werkstück aus der Bearbeitungsposition entfernt ist, ist nur eine kurze Restbewegung nötig, die in kürzerer Zeit ausgeführt werden kann, um das nachfolgende Werkstück aus der Zwischenposition in die Bearbeitungsposition zu bewegen. In der Zwischenposition kann an dem nachfolgenden Werkstück auch eine Vorbearbeitung vorgenommen werden, während das vorausgehende Werkstück noch von der Werkzeugmaschine bearbeitet wird.

Analoges ist auch in der nachfolgenden Zwischenposition durchführbar, nachdem das bearbeitete Werkstück die Bearbeitungsposition verlassen hat.

Die Handhabungsvorrichtung kann eine Kopplungseinrichtung aufweisen, welche ausgebildet und eingerichtet ist, die wenigstens eine Lünette zwischen einer Anfangsposition an dem ersten Werkstücklager und der Bearbeitungsposition in der Werkzeugmaschine automatische synchron zu einer automatischen Öffnungsbewegung und/oder Schließbewegung wenigstens eines an einem Grundkörper der jeweiligen Lünette zwischen einer Öffnungsstellung und einer Schließstellung verstellbar gelagerten Spannarms der Lünette zu führen.

In analoger Weise kann die Handhabungsvorrichtung oder eine weitere Handhabungsvorrichtung eine weitere Kopplungseinrichtung aufweisen, welche ausgebildet und eingerichtet ist, die wenigstens eine Lünette zwischen der Bearbeitungsposition in der Werkzeugmaschine und einer Endposition an dem zweiten Werkstücklager automatische synchron zu einer automatischen Öffnungsbewegung und/oder Schließbewegung wenigstens eines an einem Grundkörper der Lünette zwischen einer Öffnungsstellung und einer Schließstellung verstellbar gelagerten Spannarms der Lünette zu führen.

Die Kopplungseinrichtung kann beispielsweise ein mechanisches Kopplungsgetriebe aufweisen, welches die Bewegung der Lünette an die Bewegungen der verstellbar gelagerten Spannarme der Lünette koppelt.

In einer spezielle Ausgestaltung kann die Kopplungseinrichtung jedoch durch eine steuerungstechnische Kopplung realisiert sein, indem die Ansteuersignale an die Antriebe für das Bewegen der Lünetten im Raum mit den Ansteuersignalen an die Antriebe für das Bewegen der verstellbar gelagerten Spannarme jeder Lünette von der Steuervorrichtung synchronisiert wird. Dies hat den Vorteil, dass die jeweilige Synchronisierung bedarfsgerecht individuell eingestellt, programmiert und/oder geändert werden kann.

Bei der Handhabungsvorrichtung kann die wenigstens eine Lünette als eine C-Form-Lünette ausgebildet sein und die C-Form-Lünette derart an dem Armende des schwenkbaren Arms der Handhabungsvorrichtung angeordnet sein, dass während des Haltens eines Werkstücks mittels der C-Form-Lünette, in der Bearbeitungsposition in der Werkzeugmaschine, die C-Form-Lünette derart orientiert geführt ist, dass eine radiale Öffnung der C-Form-Lünette nach unten weist.

Eine C-Form-Lünette als solches kann einen Grundkörper aufweisen, an dem ein zangenbackenförmiger Spannarm oder zwei zangenbackenförmige Spannarme zwischen einer jeweiligen Öffnungsstellung, in der ein Werkstück in einer radialen Richtung in eine Aufnahmeposition an der C-Form-Lünette eingesetzt werden kann, und einer Schließstellung, in welcher der Spannarm das eingesetzte Werkstück um mehr als 180 Grad umschließt, schwenkbar gelagert sind. Jeder Spannarm kann an seinem distalen Armende eine Lagerstelle aufweisen, die beispielsweise eine am distalen Armende des Spannarmes drehbar gelagerte Rolle sein kann, welche in der Schließstellung bei einer Drehung des rohrförmigen oder kreiszylindrischen Werkstücks in der Lünette auf der Außenmantelwand des Werkstücks abwälzt. Am Grundkörper kann eine dritte Lagerstelle ausgebildet sein, Auch die dritte Lagerstelle kann eine drehbar gelagerte Rolle sein, welche in der Schließstellung der Spannarme bei einer Drehung des rohrförmigen oder kreiszylindrischen Werkstücks in der Lünette auf der Außenmantelwand des Werkstücks abwälzt. Die dritte Lagerstelle kann an dem Grundkörper zwischen einem ersten Spannarm und einem zweiten Spannarm angeordnet sein. Die dritte Lagerstelle kann linear verstellbar an dem Grundkörper gelagert sein, und zwar in einer radialen Richtung auf das Werkstück zu bzw. von dem Werkstück weg.

Die jeweilige Lünette kann wenigstens einen an einem Grundkörper der Lünette zwischen einer Öffnungsstellung und einer Schließstellung verstellbar gelagerten Spannarm aufweisen und die jeweilige Lünette kann ein automatisch zu betätigendes hydraulisches Ventil, einen automatisch zu betätigenden mechanischen Riegel und/oder eine automatisch betätigte Klemmeinrichtung aufweisen zum Verriegeln des verstellbar gelagerten Spannarms in seiner Schließstellung.

Es kann eine erste Handhabungsvorrichtung vorgesehen sein, welche das Werkstück aus dem ersten Werkstücklager mittels wenigstens einer Belade-Lünette erfasst, in die Belade-Lünette aufnimmt und in die Bearbeitungsposition bewegt, und es kann eine von der ersten Handhabungsvorrichtung separate zweite Handhabungsvorrichtung vorgesehen sein, welche das Werkstück mittels wenigstens einer Entlade-Lünette aus der Bearbeitungsposition entfernt, an das zweite Werkstücklager bewegt und dort durch automatisches Lösen der Entlade-Lünette ablegt.

So kann beispielsweise auf einer lateralen Seite neben der Werkzeugmaschine die erste Handhabungsvorrichtung zwischen dem ersten Werkstücklager und der Werkzeugmaschine angeordnet sein und dazu vorgesehen sein, mittels der wenigstens einen Belade-Lünette ein in der Werkzeugmaschine zu bearbeitendes Werkstück aus dem ersten Werkstücklager automatisch zu entnehmen und in die Werkzeugmaschine einzusetzen bzw. in die Bearbeitungsposition an der Werkzeugmaschine zu bringen, so dass das von der wenigstens einen Belade-Lünette gehaltene Werkstück durch die Werkzeugmaschine bearbeitet werden kann.

Auf der gegenüberliegenden lateralen Seite neben der Werkzeugmaschine kann die zweite Handhabungsvorrichtung zwischen der Werkzeugmaschine und einem zweiten Werkstücklager angeordnet sein und dazu vorgesehen sein, mittels der wenigstens einen Entlade-Lünette das in der Werkzeugmaschine bereits bearbeitete Werkstück aus der Bearbeitungsposition an der Werkzeugmaschine automatisch zu entfernen und an das zweite Werkstücklager zu bewegen, so dass das von der wenigstens einen Entlade-Lünette gehaltene Werkstück in das zweite Werkstücklager abgelegt werden kann.

Während die zweite Handhabungsvorrichtung das bereits bearbeitete Werkstück aus der Bearbeitungsposition an der Werkzeugmaschine automatisch entnimmt, kann gleichzeitig die erste Handhabungsvorrichtung ein neues zu bearbeitendes Werkstück aus dem ersten Werkstücklager entnehmen und an die Bearbeitungsposition an der Werkzeugmaschine heranbewegen. In der Bearbeitungsposition an der Werkzeugmaschine kann das Werkstück vorübergehend oder während der gesamten Bearbeitungsdauer sowohl von den Belade-Lünetten der ersten Handhabungsvorrichtung als auch von den Entlade-Lünetten der zweiten Handhabungsvorrichtung gehalten werden.

Die Aufgabe wird außerdem gelöst durch ein Bearbeitungssystem, aufweisend:
- ein erstes Werkstücklager, das ausgebildet und eingerichtet ist zum zuführenden Lagern und/oder Vereinzeln zu bearbeitender rohrförmiger oder kreiszylindrischer Werkstücke,
- ein zweites Werkstücklager, das ausgebildet und eingerichtet ist zum abführenden Lagern bearbeiteter rohrförmiger oder kreiszylindrischer Werkstücke,
- eine Werkzeugmaschine, insbesondere eine Pressschweißmaschine, eine Reibschweißmaschine, Rotationsreibschweißmaschine oder eine Magnetarc-Schweißmaschine, zur Bearbeitung der rohrförmigen oder kreiszylindrischen Werkstücke, und
- wenigstens eine Handhabungsvorrichtung nach einer der beschriebenen Ausführungsformen, die mittels einer Steuervorrichtung automatisch angesteuert ist, wobei die Steuervorrichtung ausgebildet und eingerichtet ist, ein Verfahren nach einer der beschriebenen Ausführungsformen durchzuführen.

Das erste Werkstücklager kann einen Speicherbereich aufweisen, in dem mehrere Werkstücke magaziniert vorgehalten sein können, wobei das Werkstücklager außerdem eine Vereinzelungsvorrichtung aufweisen kann, die ausgebildet ist, ein einzelnes Werkstück separat aus dem Speicherbereich oder Magazin des Werkzeuglagers automatisch entnehmen zu können und in einem vom Speicherbereich separaten Abgabebereich des Werkstücklagers vorzupositionieren, so dass die Handhabungsvorrichtung mittels der bewegbaren Lünetten das an dem Abgabebereich vorpositionierte, vereinzelte Werkstück automatisch entnehmen kann.

Konkrete Ausführungsbeispiele der Erfindung sind in der nachfolgenden Beschreibung unter Bezugnahme auf die beigefügten Figuren näher erläutert. Einzelne Merkmale oder Merkmalskombinationen dieser exemplarischen Ausführungsbeispiele können unabhängig davon, in welchem konkreten Zusammenhang sie erwähnt sind, gegebenenfalls auch einzeln oder in weiteren Kombinationen betrachtet, vorteilhafte Merkmale von alternativen Ausführungsvarianten der Erfindung darstellen.

Es zeigen:

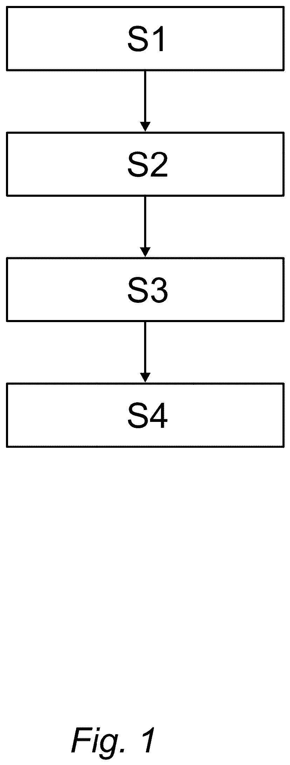

- Fig. 1: ein Flussdiagramm der Schritte in dem grundlegenden erfindungsgemäßen Verfahren,

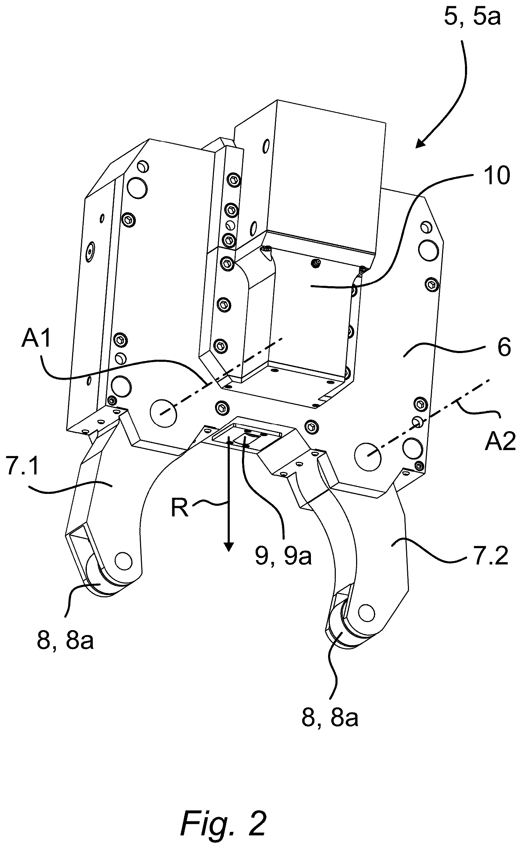

- Fig. 2: eine perspektivische Darstellung einer beispielhaften C-Form-Lünette,

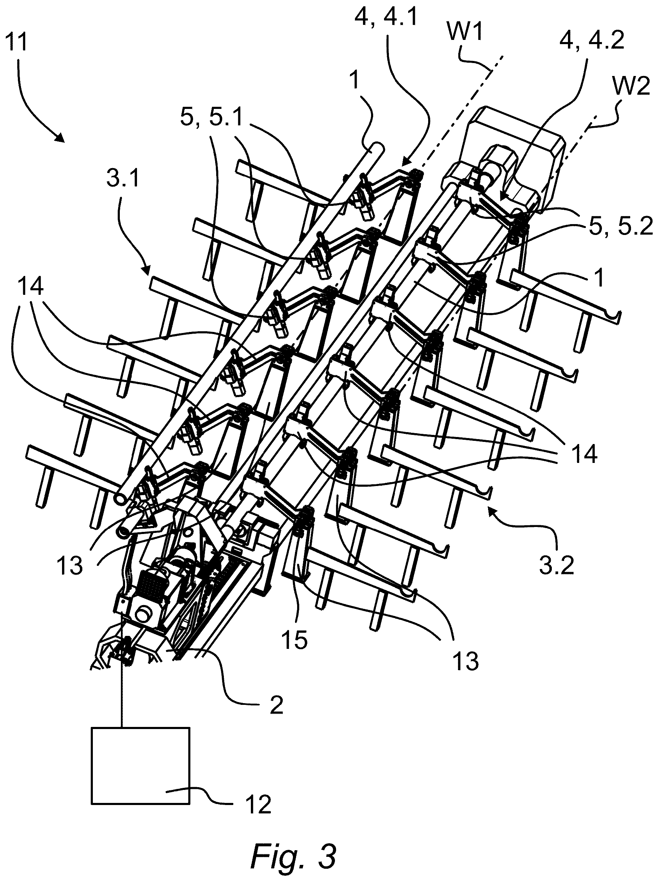

- Fig. 3: eine perspektivische Darstellung eines beispielhaften Bearbeitungssystems mit erfindungsgemäßen Handhabungsvorrichtungen, von denen eine erste Handhabungsvorrichtung ein Werkstück aus einem ersten Werkstücklager mittels mehrerer Belade-Lünetten erfasst und aufnimmt, wobei eine zweite Handhabungsvorrichtung ein vorausgehendes Werkstück mittels mehrerer Entlade-Lünetten in einer Bearbeitungsposition hält,

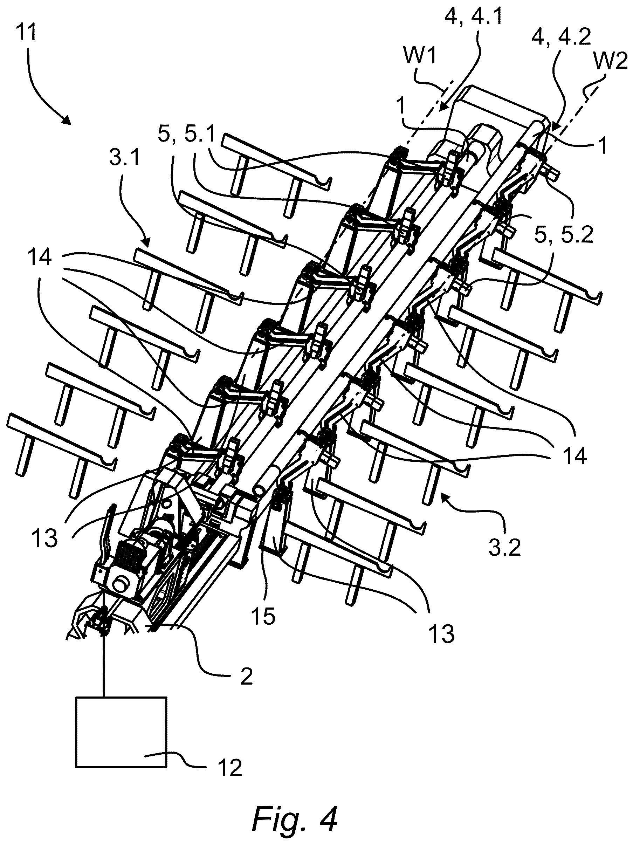

- Fig. 4: eine perspektivische Darstellung des beispielhaften Bearbeitungssystems gemäß Fig. 3 mit erfindungsgemäßen Handhabungsvorrichtungen, von denen die erste Handhabungsvorrichtung das Werkstück mittels mehrerer Belade-Lünetten in der Bearbeitungsposition hält, wobei die zweite Handhabungsvorrichtung das vorausgehende Werkstück mittels der mehreren Entlade-Lünetten aus der Bearbeitungsposition herausschwenkt,

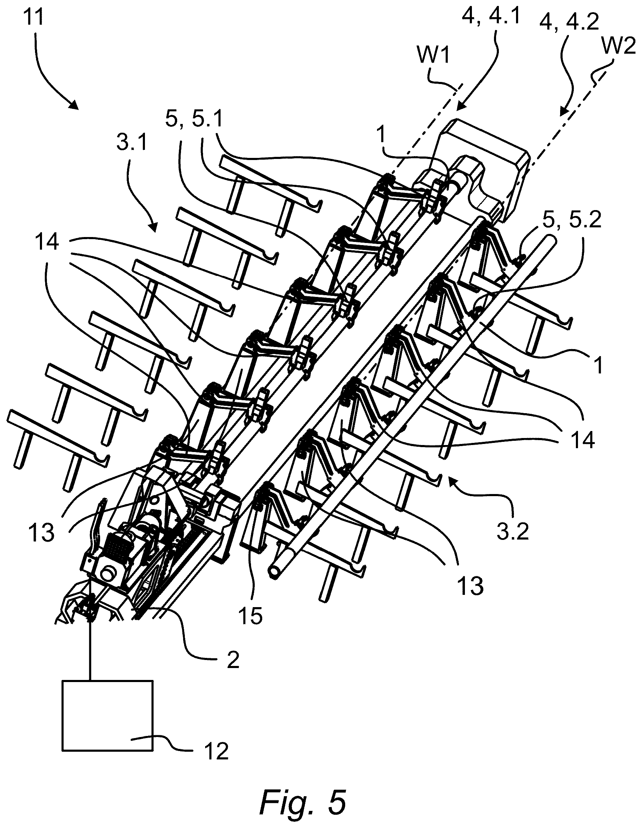

- Fig. 5: eine perspektivische Darstellung des beispielhaften Bearbeitungssystems gemäß Fig. 3 mit erfindungsgemäßen Handhabungsvorrichtungen, von denen die erste Handhabungsvorrichtung das Werkstück mittels mehrerer Belade-Lünetten in der Bearbeitungsposition hält, wobei die zweite Handhabungsvorrichtung das vorausgehende Werkstück mittels der mehreren Entlade-Lünetten an ein zweites Werkstücklager bewegt und dort durch automatisches Lösen der Entlade-Lünetten ablegt, und

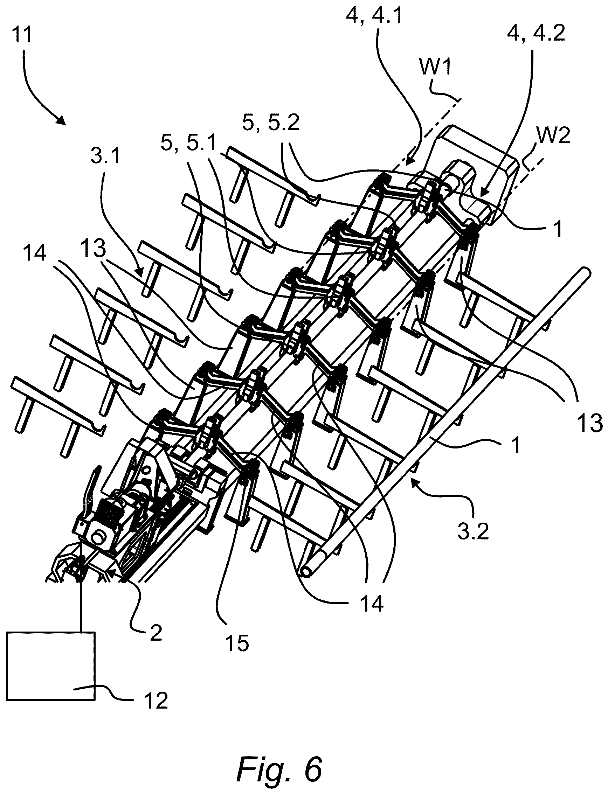

- Fig. 6: eine perspektivische Darstellung des beispielhaften Bearbeitungssystems gemäß Fig. 3 mit erfindungsgemäßen Handhabungsvorrichtungen, von denen sowohl die erste Handhabungsvorrichtung als auch die zweite Handhabungsvorrichtung das Werkstück in der Bearbeitungsposition halten bzw. von den Belade-Lünetten in die Entlade-Lünetten übergibt.

In der Fig. 1 sind die Schritte des grundlegenden erfindungsgemäßen Verfahrens zum automatischen Zuführen und/oder Abführen von Werkstücken 1 an einer Werkzeugmaschine 2 zum drehenden Bearbeiten von rohrförmigen oder kreiszylindrischen Werkstücken 1 anhand eines schematischen Flussdiagramms dargestellt.

In einem ersten Schritt S1 des Verfahrens erfolgt ein Bereitstellen von zu bearbeitenden Werkstücken 1 an einem zuführenden ersten Werkstücklager 3.1 neben der Werkzeugmaschine 2.

In einem zweiten Schritt S2 des Verfahrens erfolgt ein Bereitstellen eines abführenden zweiten Werkstücklagers 3.2 zur Aufnahme von in der Werkzeugmaschine 2 bearbeiteten Werkstücken 1.

In einem dritten Schritt S3 des Verfahrens erfolgt ein Bereitstellen einer automatisch ansteuerbaren Handhabungsvorrichtung 4 zum automatischen Entnehmen eines Werkstückes 1 aus dem ersten Werkstücklager 3.1 und Positionieren des entnommenen Werkstücks 1 in eine Bearbeitungsposition in der Werkzeugmaschine 2 und/oder zum automatischen Entnehmen des bearbeiteten Werkstücks 1 aus der Bearbeitungsposition in der Werkzeugmaschine 2 und Ablegen des bearbeiteten Werkstücks 1 in dem zweiten Werkstücklager 3.2.

In einem vierten Schritt S4 des Verfahrens erfolgt ein Führen wenigstens einer Lünette 5 (Fig. 2) mittels der automatisch ansteuerbaren Handhabungsvorrichtung 4 derart, dass die Handhabungsvorrichtung 4 ein Werkstück 1 aus dem ersten Werkstücklager 3.1 mittels der wenigstens einen Lünette 5 erfasst und in die Lünette 5 aufnimmt, das von der Lünette 5 getragene Werkstück 1 durch die Handhabungsvorrichtung 4 in die Bearbeitungsposition bewegt wird und/oder die Handhabungsvorrichtung 4 das mittels der wenigstens einen Lünette 5 erfasste Werkstück 1 aus der Bearbeitungsposition entfernt, an das zweite Werkstücklager 3.2 bewegt und dort durch automatisches Lösen der wenigstens einen Lünette 5 ablegt, wobei während einer Bearbeitung des Werkstücks 1 durch die Werkzeugmaschine 2, das Werkstück 1 in der wenigstens einen Lünette 5 geführt ist, indem die Handhabungsvorrichtung 4 die wenigstens eine Lünette 5 in einer der Bearbeitungsposition des Werkstücks 1 entsprechenden Führungsposition hält.

Die Fig. 2 zeigt eine beispielshafte Lünette 5 in der Bauart einer C-Form-Lünette 5a.

Die in Fig. 2 dargestellte C-Form-Lünette 5a weist einen Grundkörper 6 auf, an dem zwei zangenbackenförmige Spannarme 7.1 und 7.2 zwischen einer jeweiligen Öffnungsstellung (wie in Fig. 2 dargestellt), in der ein Werkstück 1 in einer radialen Richtung in eine Aufnahmeposition an der C-Form-Lünette 5a eingesetzt werden kann, und einer Schließstellung, in welcher die Spannarme 7.1 und 7.2 das eingesetzte Werkstück 1 um mehr als 180 Grad umschließen, um die Schwenkachsen A1 und A2 schwenkbar gelagert sind. Jeder Spannarm 7.1 und 7.2 weist an seinem distalen Armende eine Lagerstelle 8 auf, die beispielsweise eine am distalen Armende des jeweiligen Spannarmes 7.1 und 7.2 drehbar gelagerte Rolle 8a sein kann, welche in der Schließstellung bei einer Drehung des rohrförmigen oder kreiszylindrischen Werkstücks 1 in der Lünette 5 auf der Außenmantelwand des Werkstücks 1 abwälzt. Am Grundkörper 6 ist im Falle des vorliegenden Ausführungsbeispiels eine dritte Lagerstelle 9 ausgebildet. Auch die dritte Lagerstelle 9 weist eine drehbar gelagerte Rolle 9a auf, welche in der Schließstellung der Spannarme 7.1 und 7.2 bei einer Drehung des rohrförmigen oder kreiszylindrischen Werkstücks 1 in der Lünette 5 auf der Außenmantelwand des Werkstücks 1 abwälzt. Die dritte Lagerstelle 9 kann an dem Grundkörper 6 zwischen dem ersten Spannarm 7.1 und dem zweiten Spannarm 7.2 angeordnet sein. Die dritte Lagerstelle 9 kann linear verstellbar an dem Grundkörper 6 gelagert sein, und zwar in einer radialen Richtung R auf das Werkstück 1 zu bzw. von dem Werkstück 1 weg. Die Lünette 5 weist einen Antrieb 10 auf, der ausgebildet ist zum automatisch angesteuerten und optimalerweise synchronisiertem Schwenken der Spannarme 7.1 und 7.2 und linearem Verstellen der Lagerstelle 9.

Die Fig. 3 bis Fig. 6 zeigen jeweils eine beispielhafte Ausführungsform eines Bearbeitungssystems 11, mit dem das Verfahren durchgeführt werden kann.

Das Bearbeitungssystems 11 umfasst das erste Werkstücklager 3.1, das ausgebildet und eingerichtet ist zum zuführenden Lagern und/oder Vereinzeln zu bearbeitender rohrförmiger oder kreiszylindrischer Werkstücke 1.

Das Bearbeitungssystems 11 umfasst das zweite Werkstücklager 3.2, das ausgebildet und eingerichtet ist zum abführenden Lagern bearbeiteter rohrförmiger oder kreiszylindrischer Werkstücke 1.

Das Bearbeitungssystems 11 umfasst außerdem die Werkzeugmaschine 2, die im vorliegenden Ausführungsbeispiel insbesondere eine Pressschweißmaschine, eine Reibschweißmaschine, Rotationsreibschweißmaschine oder eine Magnetarc-Schweißmaschine, zur Bearbeitung der rohrförmigen oder kreiszylindrischen Werkstücke 1 ist.

Eine Steuervorrichtung 12 ist dabei ausgebildet und eingerichtet, das beschriebene Verfahren durchzuführen und die beiden Handhabungsvorrichtungen 4 entsprechend automatisch anzusteuern.

Die erste Handhabungsvorrichtung 4.1 ist vorgesehen, um das Werkstück 1 aus dem ersten Werkstücklager 3.1 mittels Belade-Lünetten 5.1 zu erfassen, in die Belade-Lünetten 5.1 aufzunehmen und in die Bearbeitungsposition zu bewegen.

Die von der ersten Handhabungsvorrichtung 4.1 separate zweite Handhabungsvorrichtung 4.2 ist vorgesehen, um das Werkstück 1 mittels Entlade-Lünetten 5.2 aus der Bearbeitungsposition zu entfernen, an das zweite Werkstücklager 3.2 zu bewegen und dort durch automatisches Lösen der Entlade-Lünetten 5.2 abzulegen.

In der in Fig. 3 dargestellten Situation befinden sich die Belade-Lünetten 5.1 der ersten Handhabungsvorrichtung 4.1 in einer Stellung, in der ein zu bearbeitendes Werkstück 1 von dem ersten Werkstücklager 3.1 entnommen ist, aber noch nicht in die Bearbeitungsposition an der Werkzeugmaschine 2 geschwenkt ist. In der in Fig.3 gezeigten Situation befindet sich ein vorausgehendes anderes Werkstück 1 in der Bearbeitungsposition in der Werkzeugmaschine 2 und wird dabei von den Entlade-Lünetten 5.2 der zweite Handhabungsvorrichtung 4.2 in der Bearbeitungsposition gehalten.

In der in Fig. 4 dargestellten folgenden Situation befinden sich die Belade-Lünetten 5.1 der ersten Handhabungsvorrichtung 4.1 in einer Stellung, in der das zu bearbeitende Werkstück 1 in die Bearbeitungsposition an der Werkzeugmaschine 2 geschwenkt ist. Bevor dies möglich ist, sind die Entlade-Lünetten 5.2 der zweite Handhabungsvorrichtung 4.2, wie in Fig. 4 dargestellt ist, aus der Bearbeitungsposition herausgeschwenkt und haben das bereits bearbeitet Werkstück 1 aus der Bearbeitungsposition an der Werkzeugmaschine 2 entfernt, damit die Bearbeitungsposition frei ist zum Positionieren des von den Belade-Lünetten 5.1 der ersten Handhabungsvorrichtung 4.1 gehandhabten Werkstücks 1.

In der in Fig. 5 dargestellten weiteren Situation befinden sich die Belade-Lünetten 5.1 der ersten Handhabungsvorrichtung 4.1 in einer Bearbeitungsstellung, in der das von den Belade-Lünetten 5.1 der ersten Handhabungsvorrichtung 4.1 gehandhabte Werkstück 1 sich in der Bearbeitungsposition befindet. Während der Bearbeitung dieses Werkstücks 1 durch die Werkzeugmaschine 2, bleiben die Belade-Lünetten 5.1 der ersten Handhabungsvorrichtung 4.1 in dieser Bearbeitungsstellung. Das im vorausgehenden Arbeitsschritt bereits bearbeitete Werkstück 1 wird zu diesem Zeitpunkt durch die Entlade-Lünetten 5.2 der zweite Handhabungsvorrichtung 4.2, wie in Fig. 5 dargestellt ist, an dem zweiten Werkstücklager 3.2 abgelegt.

In der in Fig. 6 dargestellten weiteren Situation befinden sich die Belade-Lünetten 5.1 der ersten Handhabungsvorrichtung 4.1 in der Bearbeitungsstellung, in der das von den Belade-Lünetten 5.1 der ersten Handhabungsvorrichtung 4.1 gehandhabte Werkstück 1 sich in der Bearbeitungsposition befindet, und die Entlade-Lünetten 5.2 der zweiten Handhabungsvorrichtung 4.2 sind von dem zweiten Werkstücklager 3.2 zurück in die Bearbeitungsstellung geschwenkt, in der die Entlade-Lünetten 5.2 der zweiten Handhabungsvorrichtung 4.2 das Werkstück 1 in der Bearbeitungsposition erfasst, so dass das Werkstück 1 sowohl von den Belade-Lünetten 5.1 als auch von den Entlade-Lünetten 5.2 gehalten ist. Nun können in einer nicht weiter dargestellten letzten Situation die Belade-Lünetten 5.1 von dem Werkstück 1 gelöst werden, in die Ausgangsstellung gemäß Fig. 3 zurückbewegt werden, um dort ein neues Werkstück 1 aus dem ersten Werkstücklager 3.1 zu holen, während das bisherige Werkstück nach seiner Bearbeitung in der Werkzeugmaschine 2 von den Entlade-Lünetten 5.2 der zweiten Handhabungsvorrichtung 4.2 in das zweite Werkstücklager 3.2 transferiert werden und dort gemäß Fig. 5 abgelegt wird.

Die in Fig. 3 bis Fig.6 dargestellte Handhabungsvorrichtung 4 kann somit wenigsten ein Grundgestell 13 und daran um eine gemeinsame Schwenkachse W1, W2 automatisch schwenkbar gelagerte Arme 14 aufweisen, an deren distalen Armenden jeweils mindestens eine Lünette 5 befestigt oder gelagert ist.

Wenigstens ein automatisch ansteuerbarer Antrieb 15 ist ausgebildet zum automatischen Schwenken der Arme 14 zwischen einer Aufnahmestellung in welcher die Lünetten 5 in eine Aufnahmeposition bewegt sind, in welcher ein Werkstück 1 aus dem ersten Werkstücklager 3.1 durch die Lünetten 5 aufnehmbar ist, und einer Bearbeitungsstellung in welcher das von den Lünetten 5 getragene Werkstück 1 in die Bearbeitungsposition in der Werkzeugmaschine 2 oder in eine Zwischenstellung gebracht ist.

Alternativ oder ergänzend kann derselbe Antrieb 15 oder ein weiterer automatisch ansteuerbarer Antrieb 15 (nicht dargestellt) ausgebildet sein zum automatischen Schwenken der Arme 14 zwischen der Bearbeitungsstellung in welcher das von den Lünetten 5 getragenes Werkstück 1 sich in der Bearbeitungsposition in der Werkzeugmaschine 2 befindet und einer Abgabestellung in welcher die Lünetten 5 in eine Abgabeposition bewegt sind, in welcher das Werkstück 1 durch die Lünetten 5 in das zweite Werkstücklager 3.2 ablegbar ist.

Die Werkzeugmaschine 2 kann insbesondere eine Pressschweißmaschine, eine Reibschweißmaschine, Rotationsreibschweißmaschine oder eine Magnetarc-Schweißmaschine sein.

## Patentansprüche

1. Verfahren zum automatischen Zuführen und/oder Abführen von Werkstücken (1) an einer Werkzeugmaschine (2) zum drehenden Bearbeiten von rohrförmigen oder kreiszylindrischen Werkstücken (1), aufweisend die Schritte:
- Bereitstellen von zu bearbeitenden Werkstücken (1) an einem zuführenden ersten Werkstücklager (3.1) neben der Werkzeugmaschine (1),
- Bereitstellen eines abführenden zweiten Werkstücklagers (3.2) zur Aufnahme von in der Werkzeugmaschine (2) bearbeiteten Werkstücken (1),
- Bereitstellen einer automatisch ansteuerbaren Handhabungsvorrichtung (4) zum automatischen Entnehmen eines Werkstückes (1) aus dem ersten Werkstücklager (3.1) und Positionieren des entnommenen Werkstücks (1) in eine Bearbeitungsposition in der Werkzeugmaschine (2) und/oder zum automatischen Entnehmen des bearbeiteten Werkstücks (1) aus der Bearbeitungsposition in der Werkzeugmaschine (2) und Ablegen des bearbeiteten Werkstücks (1) in dem zweiten Werkstücklager (3.2),
- Führen wenigstens einer Lünette (5) mittels der automatisch ansteuerbaren Handhabungsvorrichtung (4) derart, dass die Handhabungsvorrichtung (4) ein Werkstück (1) aus dem ersten Werkstücklager (3.1) mittels der wenigstens einen Lünette (5) erfasst und in die Lünette (5) aufnimmt, das von der Lünette (5) getragene Werkstück (1) durch die Handhabungsvorrichtung (4) in die Bearbeitungsposition bewegt wird und/oder die Handhabungsvorrichtung (4) das mittels der wenigstens einen Lünette (5) erfasste Werkstück (1) aus der Bearbeitungsposition entfernt, an das zweite Werkstücklager (3.2) bewegt und dort durch automatisches Lösen der wenigstens einen Lünette (5) ablegt, wobei während einer Bearbeitung des Werkstücks (1) durch die Werkzeugmaschine (2), das Werkstück (1) in der wenigstens einen Lünette (5) geführt ist, indem die Handhabungsvorrichtung (4) die wenigstens eine Lünette (5) in einer der Bearbeitungsposition des Werkstücks (1) entsprechenden Führungsposition hält.

2. Verfahren nach Anspruch 1, **dadurch gekennzeichnet, dass** das automatische Führen der wenigstens einen Lünette (5) mittels der Handhabungsvorrichtung (4) zwischen einer Anfangsposition an dem ersten Werkstücklager (3.1) und der Bearbeitungsposition in der Werkzeugmaschine (2) und/oder zwischen der Bearbeitungsposition in der Werkzeugmaschine (2) und einer Endposition an dem zweiten Werkstücklager (3.2) synchron zu einer automatischen Öffnungsbewegung und/oder Schließbewegung wenigstens eines an einem Grundkörper (6) der Lünette (5) zwischen einer Öffnungsstellung und einer Schließstellung verstellbar gelagerten Spannarms (7.1, 7.2) der Lünette (5) erfolgt.

3. Verfahren nach Anspruch 1 oder 2, **dadurch gekennzeichnet, dass** als Lünette (5) eine C-Form-Lünette (5a) verwendet wird und das automatische Führen der wenigstens einen C-Form-Lünette (5a) mittels der Handhabungsvorrichtung (4) derart durchgeführt wird, dass während des Haltens des Werkstücks (1) mittels der C-Form-Lünette (5a), in der Bearbeitungsposition in der Werkzeugmaschine (2), die C-Form-Lünette (5a) derart orientiert geführt wird, dass die radiale Öffnung der C-Form-Lünette (5a) nach unten weist.

4. Verfahren nach einem der Ansprüche 1 bis 3, **dadurch gekennzeichnet, dass** die Lünette (5) wenigstens einen an einem Grundkörper (6) der Lünette (5) zwischen einer Öffnungsstellung und einer Schließstellung verstellbar gelagerten Spannarm (7.1, 7.2) aufweist und nach einem Erfassen und Aufnehmen eines Werkstücks (1) durch die von der Handhabungsvorrichtung (4) geführte Lünette (5), die Schließstellung des wenigstens einen verstellbar gelagerten Spannarms (7.1, 7.2) automatisch überwacht wird.

5. Verfahren nach einem der Ansprüche 1 bis 4, **dadurch gekennzeichnet, dass** eine erste Handhabungsvorrichtung (4.1) vorgesehen ist, welche das Werkstück (1) aus dem ersten Werkstücklager (3.1) mittels wenigstens einer Belade-Lünette (5.1) erfasst, in die Belade-Lünette (5.1) aufnimmt und in die Bearbeitungsposition bewegt, und eine von der ersten Handhabungsvorrichtung (4.1) separate zweite Handhabungsvorrichtung (4.2) vorgesehen ist, welche das Werkstück (1) mittels wenigstens einer Entlade-Lünette (5.2) aus der Bearbeitungsposition entfernt, an das zweite Werkstücklager (3.2) bewegt und dort durch automatisches Lösen der Entlade-Lünette (5.2) ablegt.

6. Verfahren nach einem der Ansprüche 1 bis 5, **dadurch gekennzeichnet, dass** die Handhabungsvorrichtung (4) wenigstens eine automatisch verstellbar gelagerte erste Lünette (5) aufweist und wenigstens eine unabhängig von der ersten Lünette (5) automatisch verstellbar gelagerte zweite Lünette (5) aufweist, wobei während eines Lagerns eines Werkstücks (1) in der ersten Lünette (5) während einer Bearbeitung des Werkstücks (1) durch die Werkzeugmaschine (2) in einer der Bearbeitungsposition des Werkstücks (1) entsprechenden Führungsposition der ersten Lünette (5), die zweite Lünette (5) in eine von der Führungsposition verschiedenen Verwahrungsposition bewegt ist, in der die zweite Lünette (5) außerhalb des Arbeitsbereiches von Werkzeugmaschine (2) und Werkstück (1) positioniert ist.

7. Verfahren nach einem der Ansprüche 1 bis 6, **dadurch gekennzeichnet, dass** als Handhabungsvorrichtung (4) wenigstens ein um eine Schwenkachse (W1, W2) automatisch schwenkbarer Arm (14) verwendet wird, der an seinem distalen Armende die wenigstens eine Lünette (5) trägt.

8. Verfahren nach einem der Ansprüche 1 bis 6, **dadurch gekennzeichnet, dass** als Handhabungsvorrichtung (4) wenigstens ein Roboterarm oder ein Ladeportal verwendet wird, an dessen Werkzeugflansch die wenigstens eine Lünette (5) befestigt ist.

9. Verfahren nach einem der Ansprüche 1 bis 8, **dadurch gekennzeichnet, dass** als Werkzeugmaschine (2) eine Pressschweißmaschine, eine Reibschweißmaschine, Rotationsreibschweißmaschine oder eine Magnetarc-Schweißmaschine verwendet wird.

10. Handhabungsvorrichtung (4), aufweisend:
- ein Grundgestell (13),
- wenigstens ein am Grundgestell (13) um eine Schwenkachse (W1, W2) automatisch schwenkbar gelagerten Arm (14), der ein distales Armende aufweist,
- wenigstens eine an dem Armende des Arms (14) angeordnete Lünette (5), die einen Grundkörper (6) und wenigstens einen an dem Grundkörper (6) zwischen einer Offenstellung und einer Schließstellung verstellbar gelagerten Spannarm (7.1, 7.2) aufweist,
- wenigstens einen automatisch ansteuerbaren Antrieb (15), der ausgebildet ist zum automatischen Schwenken des Arms (14) zwischen einer Aufnahmestellung in welcher die Lünette (5) in eine Aufnahmeposition bewegt ist, in welcher ein Werkstück (1) aus einem ersten Werkstücklager (3.1) durch die Lünette (5) aufnehmbar ist, und einer Bearbeitungsstellung in welcher ein von der Lünette (5) getragenes Werkstück (1) in eine Bearbeitungsposition in einer Werkzeugmaschine (2) oder in eine zwischen der Aufnahmeposition und der Bearbeitungsposition liegende Zwischenposition gebracht ist, und/oder
- der ausgebildet ist zum automatischen Schwenken des Arms (14) zwischen einer Bearbeitungsstellung in welcher ein von der Lünette (5) getragenes Werkstück (1) sich in einer Bearbeitungsposition in einer Werkzeugmaschine (2) befindet und einer Abgabestellung in welcher die Lünette (5) in eine nachfolgende Zwischenposition oder in eine Abgabeposition bewegt ist, in welcher das Werkstück (1) durch die Lünette (5) in ein zweites Werkstücklager (3.2) ablegbar ist.

11. Handhabungsvorrichtung (4) nach Anspruch 10, **dadurch gekennzeichnet, dass** die Handhabungsvorrichtung (4) eine Kopplungseinrichtung aufweist, welche ausgebildet und eingerichtet ist, die wenigstens eine Lünette (5) zwischen einer Anfangsposition an dem ersten Werkstücklager (3.1) und der Bearbeitungsposition in der Werkzeugmaschine (2) und/oder zwischen der Bearbeitungsposition in der Werkzeugmaschine (2) und einer Endposition an dem zweiten Werkstücklager (3.2) automatische synchron zu einer automatischen Öffnungsbewegung und/oder Schließbewegung wenigstens eines an einem Grundkörper (6) der Lünette (5) zwischen einer Öffnungsstellung und einer Schließstellung verstellbar gelagerten Spannarms (7.1, 7.2) der Lünette (5) zu führen.

12. Handhabungsvorrichtung (4) nach Anspruch 10 oder 11, **dadurch gekennzeichnet, dass** die wenigstens eine Lünette (5) als eine C-Form-Lünette (5a) ausgebildet ist und die C-Form-Lünette (5a) derart an dem Armende des schwenkbaren Arms (14) der Handhabungsvorrichtung (5) angeordnet ist, dass während des Haltens eines Werkstücks (1) mittels der C-Form-Lünette (5a), in der Bearbeitungsposition in der Werkzeugmaschine (2), die C-Form-Lünette (5a) derart orientiert geführt ist, dass eine radiale Öffnung der C-Form-Lünette (5a) nach unten weist.

13. Handhabungsvorrichtung (4) nach einem der Ansprüche 10 bis 12, **dadurch gekennzeichnet, dass** die Lünette (5) wenigstens einen an einem Grundkörper (6) der Lünette (5) zwischen einer Öffnungsstellung und einer Schließstellung verstellbar gelagerten Spannarm (7.1, 7.2) aufweist und die Lünette (5) ein automatisch zu betätigendes hydraulisches Ventil, einen automatisch zu betätigenden mechanischen Riegel und/oder eine automatisch betätigte Klemmeinrichtung aufweist zum Verriegeln des verstellbar gelagerten Spannarms (7.1, 7.2) in seiner Schließstellung.

14. Handhabungsvorrichtung (4) nach einem der Ansprüche 10 bis 13, **dadurch gekennzeichnet, dass** eine erste Handhabungsvorrichtung (4.1) vorgesehen ist, welche das Werkstück (1) aus dem ersten Werkstücklager (3.1) mittels wenigstens einer Belade-Lünette (5.1) erfasst, in die Belade-Lünette (5.1) aufnimmt und in die Bearbeitungsposition bewegt, und eine von der ersten Handhabungsvorrichtung (5.1) separate zweite Handhabungsvorrichtung (5.2) vorgesehen ist, welche das Werkstück (1) mittels wenigstens einer Entlade-Lünette (5.2) aus der Bearbeitungsposition entfernt, an das zweite Werkstücklager (3.2) bewegt und dort durch automatisches Lösen der Entlade-Lünette (5.2) ablegt.

15. Bearbeitungssystem (11), aufweisend:
- ein erstes Werkstücklager (3.1), das ausgebildet und eingerichtet ist zum zuführenden Lagern und/oder Vereinzeln zu bearbeitender rohrförmiger oder kreiszylindrischer Werkstücke (1),
- ein zweites Werkstücklager (3.2), das ausgebildet und eingerichtet ist zum abführenden Lagern bearbeiteter rohrförmiger oder kreiszylindrischer Werkstücke (1),
- eine Werkzeugmaschine (2), insbesondere eine Pressschweißmaschine, eine Reibschweißmaschine, Rotationsreibschweißmaschine oder eine Magnetarc-Schweißmaschine, zur Bearbeitung der rohrförmigen oder kreiszylindrischen Werkstücke (1), und
- wenigstens eine Handhabungsvorrichtung (4) nach einem der Ansprüche 10 bis 14, die mittels einer Steuervorrichtung (12) automatisch angesteuert ist, wobei die Steuervorrichtung (12) ausgebildet und eingerichtet ist, ein Verfahren nach einem der Ansprüche 1 bis 9 durchzuführen.
